# EUROPEAN PATENT SPECIFICATION

(11) **EP 0 699 174 B1**
(45) Date of publication and mention of the grant of the patent: **14.05.1997**
(21) Application number: 94909524.4
(22) Date of filing: 02.02.1994
(51) Int. Cl.: C04B 35/58, C04B 35/80, C04B 35/584, C04B 35/81

(54) **SINTERED SELF-REINFORCED SILICON NITRIDE**
GESINTERTES SELBSTARMIERTES SILICIUMNITRID
NITRURE DE SILICIUM FRITTE AUTORENFORCE

(30) Priority: 18.05.1993 US 63587
(43) Date of publication of application: 06.03.1996
(73) Proprietor: THE DOW CHEMICAL COMPANY, Midland, Michigan 48640 (US)
(72) Inventor: PYZIK, Aleksander, J., Midland, MI 48640 (US); ROSSOW, Harold, E., Midland, MI 48640 (US)
(74) Representative: Burford, Anthony Frederick
(86) International application number: PCT/US94/01180
(87) International publication number: WO 94/26678

(56) References cited:
- WO-A-92/13812
- WO-A-92/14685

## Description

This invention pertains to a sintered self-reinforced silicon nitride (Si₃N₄) ceramic body and to compositions used in preparing the same.

Silicon nitride ceramics are recognized for their excellent mechanical and physical properties, including good wear resistance, low coefficient of thermal expansion, good thermal shock resistance, high creep resistance, and high electrical resistivity. In addition, Si₃N₄ ceramics resist chemical attack, particularly oxidation. Because of these attributes, Si₃N₄ is useful in a variety of wear and high temperature applications, such as cutting tools and parts in pumps and engines.

Typically, densification of Si₃N₄ requires the use of densification aids, such as oxides of magnesium (Mg), yttrium (Y), aluminum (Al), cerium (Ce), silicon (Si), and zirconium (Zr). A powder mixture comprising Si₃N₄ and one or more of such densification aids is usually prepared and heated under conditions described hereinafter. The densification aids form a liquid phase into which α-Si₃N₄ dissolves and from which it precipitates as β-Si₃N4.

The final density of a ceramic body depends largely on the density of the body before heat is applied. This is often referred to as "green density," and the body is referred to as "greenware." The most common method of forming greenware is dry pressing. However, a problem with dry pressing is that it does not favor forming bodies that are large or have a complex shape. In addition, forming greenware by dry pressing typically results in low density parts with non-uniform distributions of porosity. The nonuniformity generally relates to a higher density at the edge of a ceramic part than in the center. Further, binders, used to process the bodies into their near net shapes, usually have to be removed. De-bindering is a long and difficult process that often leads to development of internal cracks within the body.

An alternate method of forming ceramic greenware is colloidal processing, such as slip-casting. An advantage of colloidal processing is that large, complex shaped, high density greenware can be produced without the use of binders. A second advantage is that aqueous carrier media may be used, eliminating the need for more expensive or potentially environmentally hazardous media, processing conditions or both. Notwithstanding these advantages, colloidal processing has one major disadvantage in that as the number of components in a formulation increases, it becomes more difficult to find common colloidal processing conditions. This is because every component has different surface characteristics, and these characteristics determine the conditions under which colloidal processing will work. Thus, for many multi-component ceramic compositions, it is difficult to form ceramic greenware by colloidal processing.

Typically, in order to obtain substantially full densification of the aforementioned powder mixture or greenware, one of four general methods is used: hot pressing (HP), hot isostatic pressing (HIP), pressureless sintering, or low pressure gas sintering. Densification of Si₃N₄ alone normally does not go to completion in the absence of high pressure. For example, the density of a Si₃N₄ ceramic body might only reach 80 or 90% of its theoretical value. A density of at least 98% of theoretical is required to achieve a ceramic having excellent mechanical and physical properties, such as high fracture strength and high fracture toughness. Further, at high temperatures and low pressures, Si₃N₄ decomposes into elemental Si and nitrogen. Thus, commercial needs for fully densified Si₃N₄ ceramics, having excellent fracture strength and fracture toughness, are typically met by using HP or HIP to densify combinations of Si₃N₄ and densification aids.

The use of HP or HIP to densify combinations of Si₃N₄ and densification aids poses two problems. First, both methods require complicated high pressure equipment. Second, the methods typically yield a ceramic body having only a simple shape. In order to obtain a more complicated net or near net shape, the ceramic body that is densified HP or HIP is typically subjected to post-densification procedures such as diamond grinding. Although more complicated shapes may be obtained by pressureless or low pressure gas sintering, these methods typically present difficulties in obtaining substantially full dense ceramic bodies that have high fracture strength and toughness.

In one aspect, this invention is a process for preparing a dense, self-reinforced Si₃N₄ (SRS)ceramic body by pressureless or low pressure gas sintering. The process comprises subjecting a powder mixture including:
(a) Si₃N₄ in an amount sufficient to provide a ceramic body;
(b) a combination of a source of magnesium oxide (MgO) and a source of silicon dioxide (SiO₂), the SiO₂ being present in an amount sufficient to provide a total SiO₂ content of at least 3 weight percent (wt%), the combination being present in an amount sufficient to aid densification of the powder;
(c) a source of yttrium oxide (Y₂O₃)in an amount sufficient to promote essentially complete conversion of the Si₃N₄ to β-Si₃N₄;
(d) a catalytic amount of a source of zirconium oxide (ZrO₂); and
(e) at least one whisker growth enhancing compound in an amount sufficient to promote the formation of β-Si₃O₄ whiskers, said compound(s) being selected from a source of titanium dioxide (TiO₂) and a source of aluminum oxide (Al₂O₃) ;
to a pressure within a range of from 1 atmosphere (atm) (0.1 MPa) to 100 atm (10 MPa) and to a temperature sufficient to provide for densification to a value which is at least 98% of theoretical. In addition, the conditions of temperature and pressure are sufficient to provide in situ formation of β-Si₃N₄ whiskers having a high average aspect ratio. For the purposes of this invention, "high" average aspect ratio means an average aspect ratio of at least 2.5. In this manner, a dense, SRS ceramic body having a fracture toughness greater than 6.0 MPa· (m)^{½}, as measured by the Chevron notch technique at 23°C, is formed.

The process of this invention provides a fully densified, or nearly fully densified, SRS ceramic body by pressureless or low pressure sintering. As used herein, "nearly fully densified" means that the sintered body has a density of at least 98% of theoretical. As used herein, "fully densified" means that the sintered body has a density of at least 99.5% of theoretical. The process of this invention also reduces the need for high pressure equipment, eliminates the need for diamond grinding, and readily provides complicated near net shapes in large numbers.

In a second aspect, the process of this invention further comprises a step of forming the powder mixture into greenware prior to sintering. Under this step, the greenware may be formed out of a colloidal suspension comprising the powder mixture dispersed in an aqueous carrier medium, wherein each component of the powder mixture is water dispersible and nonflocculating.

In a third aspect, this invention is a Si₃N₄ ceramic body having a density of at least 98% of theoretical value and a toughness > 6.0 MPa· (m)^{½}, as measured by the Chevron notch technique at 23°C. This Si₃N₄ body comprises:
(a) a crystalline phase of β-Si₃N₄ of which at least 20 volume percent (vol%), as measured by viewing one plane of the Si₃N₄ ceramic body by scanning electron microscopy (SEM), is present as whiskers having an average aspect ratio of at least 2.5;
(b) a glassy grain boundary phase, in an amount ranging from 2 to 10 wt%, based on total weight of the composition, comprising oxygen, nitrogen, magnesium (Mg), yttrium (Y), Si, Zr, and at least one metal selected from titanium (Ti) and Al;
(c) a second crystalline phase comprising ZrO₂, in an amount ranging from 0.1 to 3 wt% based on total weight of the composition; and
(d) at least one additional crystalline phase in an amount ranging from 0.1 to 3 wt% based on total weight of the composition, the additional phase(s) comprising metal zirconium silicide and metal zirconium silicon nitride, wherein the metal is selected from Ti and Al.

In a fourth aspect, this invention is an article of manufacture formed from the above-identified Si₃N₄ ceramic body. Examples of possible articles of manufacture are cutting tools and parts in pumps and engines. Articles of manufacture suitable for use in other wear or high temperature applications or end uses are readily determined by skilled artisans without undue experimentation.

The Si₃N₄ starting material used in preparing the ceramic body of this invention can be any Si₃N₄ powder, including the crystalline forms of α-Si₃N₄ and β-Si₃N₄, or noncrystalline amorphous Si₃N₄, or mixtures thereof. However, the preferred Si₃N₄ powder has a high purity and a high α/β weight ratio, as disclosed in Pyzik, US-A-5,120,328, col. 4, lines 13-37, 48-58. The powder may be of any size or surface area (SA) provided the dense, SRS ceramic body of this invention is obtained. Preferably, the particles have an average diameter within a range of from 0.2 µm to 5 µm; more preferably, from 0.2 µm to 1 µm. The powder has a SA that is desirably within a range of from 5 m²/g to 15 m²/g, as determined by the Brunauer-Emmett-Teller (BET) method of measuring SA, which is described in C. N. Satterfield, Heterogeneous Catalysis in Practice 102-05 (McGraw-Hill Book Company, 1980). The range is preferably from 8 m²/g to 12 m²/g.

Oxygen is present to some extent in the form of SiO₂, usually as a coating on the surface of Si₃N₄ particles. The amount of SiO₂ varies according to the purity of the starting Si₃N₄ powder and its method of manufacture. Typically, the concentration of SiO₂, introduced naturally through the Si₃N₄ powder, ranges from 1.5 to 4 wt%, based on the total weight of the powder mixture. Preferably, total SiO₂ content (amount added plus that present on the surface of the Si₃N₄) is from 3 wt% to 5 wt%. The total SiO₂ content is more preferably from 3.7 wt% to 4.2 wt%. These amounts of SiO₂ are beneficial and aid in densification of the ceramic composition. Typically, if the SiO₂ content of the Si₃N₄ is less than 3 wt%, additional SiO₂ is added.

The Si₃N₄ is present in an amount that is suitably within a range of from 90 to 98 wt% based on the total weight of the powder mixture. The range is desirably from 90 to 98 wt% for low pressure gas sintering, and from 92 to 97 wt% for pressureless sintering. Preferably, the range is from 92 to 97 wt% for low pressure gas sintering, and from 93 to 96 wt% for pressureless sintering.

A source of SiO₂ and a source of MgO are suitably employed as densification aids in the process of this invention. Silica and MgO function as densification aids because a resulting SiO₂ and MgO containing glass forms a liquid phase at a temperature within a range of from 1300°C to 1500°C into which α-Si₃N₄ dissolves. For purposes of this invention, "source" refers to a starting material that is either a desired component of the ceramic body, or a material that converts to the desired component under process conditions. For example, a source of MgO may be MgO itself or any starting material that converts to MgO under process conditions. A specific process condition may influence selection of a particular source. For example, when using a colloidal suspension process with an aqueous carrier medium, a water dispersible, nonflocculating source of MgO, such as magnesium hydroxide (Mg(OH)₂), is preferred. During densification of the powdered mixture formed out of this colloidal suspension, Mg(OH)₂ converts to MgO. A "source" may also consist of more than one starting material, as long as the desired component is obtained under process conditions.

Any amount of a source of MgO which, in conjunction with the SiO₂, produces, by pressureless or low pressure gas sintering, the dense, self-reinforced Si₃N₄ ceramic body of the invention is acceptable. For example, if the source of MgO is Mg(OH)₂, each wt% of Mg(OH)₂ added to the composition is equal to 0.69 wt% of MgO. Magnesia is suitably present in an amount within a range of from 0.5 to 3 wt% based on the powder mixture total weight (0.7 to 4.3 wt% Mg(OH)₂). The amount of MgO is preferably within a range of from 0.7 to 2.5 wt% (1 to 3.6 wt% Mg(OH)₂), more preferably, from 0.9 to 2 wt% (1.3 to 2.9 wt% Mg(OH)₂). The total amount of densification aid (SiO₂ plus MgO), including the SiO₂ present on the Si₃N₄, is within a range that is desirably from 3.5 to 8 wt% based on the total weight of the powder mixture, preferably from 4.6 to 6.2 wt%.

In addition to densification aids, the powder mixture must contain a conversion aid. A source of Y₂O₃ is a desirable conversion aid. The source of Y₂O₃ may be either Y₂O₃ or a starting material that converts to Y₂O₃ under process conditions. As disclosed in Pyzik, US-A-5,120,328, col. 5, lines 34-52, the conversion aid promotes the rapid, essentially complete conversion of α-Si₃N₄ to β-Si₃N₄. This conversion is most desirable because β-Si₃N₄, in the form of elongate, single crystal whiskers or grains, is important for obtaining the high fracture toughness and high fracture strength of the Si₃N₄ ceramic body of this invention. All references hereinafter to Si₃N₄ whiskers, single crystal whiskers and single crystal Si₃N₄ whiskers are intended to be synonymous and may be used interchangeably.

A source of Y₂O₃ can be employed in any amount, and in any ratio to the densification aids, provided the amount and ratio are sufficient to cause the essentially complete conversion of the starting Si₃N₄ to β-Si₃N₄ and produce the dense, SRS ceramic body of the invention by pressureless or low pressure gas sintering. The amount of Y₂O₃ provided by a source of Y₂O₃ is within a range that is desirably from 1 to 6 wt%, preferably from 2 to 4 wt%, based on the total weight of the powder mixture. The amount of Y₂O₃ is desirably sufficient to provide a weight ratio of Y₂O₃ to the combination of MgO and SiO₂ that is within a range of from 2:1 to 1:8.

The third component required to be present in the powder mixture is a source of a catalytic amount of ZrO₂. The source of ZrO₂ may be ZrO₂ or any starting material that converts to ZrO₂ under process conditions. As disclosed in Pyzik, US-A-5,120,328, col. 6, lines 14-33, ZrO₂ functions in a multi-fold manner and is therefore referred to as a "catalyst" for purposes of this invention. For example, ZrO₂ catalyzes the formation of elongate β-Si₃N₄ whiskers, and acts as both a densification aid and as a "getter" for metallic impurities, thereby cleaning the glassy phase.

Any catalytic amount of a source of ZrO₂ is acceptable provided it is sufficient to achieve its catalytic functions and provide the dense SRS body of this invention by pressureless or low pressure gas sintering. The amount of ZrO₂ provided by the source of ZrO₂ is within a range that is suitably from 0.1 to 3 wt%, preferably from 0.2 to 1 wt%, based on the total weight of the powder mixture. This amount of ZrO₂ can be added to the powder mixture directly, or can be obtained from the use of ZrO₂ balls during attrition mixing of the other powder components. Under typical attrition mixing process conditions of 250 revolutions per minute (rpm) for about one hour, the amount of ZrO₂ introduced is 0.5 wt%.

A densification aid (combination of MgO and SiO₂) to ZrO₂ weight ratio may be any that produces the dense, SRS body of this invention. The weight ratio is preferably within a range of from 40:1 to 1:1. If the weight ratio falls outside of this range, the final density of the ceramic body is typically reduced.

The fourth component is a whisker growth enhancing compound. As disclosed in Pyzik, US-A-5,120,328, col. 7, lines 5-44, this compound helps to provide a ceramic body of superior fracture toughness and fracture strength. In Pyzik, US-A-4,883,776, the presence of calcium, particularly calcium oxide, was found to provide advantages as a whisker growth enhancing compound when Si₃N₄ powder compositions were hot-pressed into finished ceramic bodies. Subsequently, in Pyzik, US-A-5,120,328, calcium oxide, tantalum oxide, hafnium oxide, gallium oxide, and indium oxide, were found to promote growth of β-Si₃N₄ whiskers during pressureless sintering, or low pressure gas sintering, of Si₃N₄ ceramic bodies.

It has now been discovered that compounds other than oxides of calcium, tantalum, hafnium, gallium, and indium may be employed to promote whisker growth. The discovery is that TiO₂ and Al₂O₃ also promote growth of β-Si₃N₄ whiskers during pressureless or low pressure gas sintering. These compounds can be used as whisker growth enhancing compounds either by themselves, or in combination as a mixture. Using these whisker growth enhancing compounds, ceramic bodies having a fracture toughness > 6 MPa· (m)^{½}, as measured by the Chevron Notch Test, are obtained.

Any amount of whisker growth enhancing compound source(s) is acceptable provided it is sufficient to promote the formation of β-Si₃N₄ whiskers, described hereinbelow, and produce the dense, SRS ceramic body of this invention by pressureless or low pressure gas sintering. The source(s) may be TiO₂, Al₂O₃, a mixture of TiO₂ and Al₂O₃, or any starting material that converts to at least one of these compounds under process conditions. The amount is desirably sufficient to provide an amount of whisker growth enhancing compound within a range of from 0.01 to 3 wt%, based on the total weight of the powder mixture. The range is preferably from 0.1 to 1 wt%, more preferably, from 0.15 to 0.5 wt%.

It is desirable to use sources of MgO, SiO₂, Y₂O₃, ZrO₂, and Al₂O₃ and/or TiO₂ in the form of powders that are pure and sufficiently small in size. As disclosed in Pyzik, US-A-5,120,328, col. 7, line 55 to col. 8, line 2, larger amounts of impurities, as for example in the 0.5 wt% range, are not recommended as they may cause a change in the final ceramic composition and properties. In addition, a small powder particle size is favored, preferably having an average particle size ≤ 5 µm in diameter, more preferably, ≤ 1 µm in diameter.

In the process of this invention, the starting Si₃N₄ powder is mixed with a combination of the densification aid(s), conversion aid, ZrO₂ catalyst, and whisker growth enhancing compound(s) to obtain a mixture that is used in preparing the densified, tough SRS ceramic body of this invention. It has now been discovered that each component of the mixture may also be derived from many different sources as long as the sources are converted to the respective components under process conditions. For example, one source of an oxide component may be difficult to introduce to an aqueous carrier medium, being nondispersible and causing flocculation. A different source of the same oxide component may, however, be water dispersible and nonflocculating. Thus, it is desirable to determine for each component which source may be introduced in combination with other components to obtain effective dispersion of the components without incurring an undesirable amount of flocculation. For example, Mg(OH)₂, a source of MgO, is water dispersible and nonflocculating, whereas MgO itself flocculates in water. Although this list is not meant to be exhaustive, other examples may be calcium silicate as a source of SiO₂, calcium zirconate or silicon zirconate as a source of ZrO₂, aluminum hydroxide as a source of Al₂O₃, and calcium titanate or titanium silicate as sources of TiO₂. The introduction of calcium, by means of the above described compositions, is also advantageous, since it introduces an additional glass component into the composition, and is useful as a whisker growth enhancing compound in conjunction with at least one compound selected from Al₂O₃ and TiO₂.

The total quantity of components other than Si₃N₄ depends on desired end use applications for the sintered ceramics prepared from the powder mixture. Those skilled in the art recognize that, although the above identified sources of oxide components are used, some of the products derived from these sources under process conditions may also be non-oxide derivatives of Mg, Si, Y, Zr, and at least one compound of a metal selected from Al and Ti. This is acceptable as long as it results in an adequate oxide content and does not adversely affect properties of the resultant sintered body. Ordinarily, the total quantity of MgO, SiO₂, Y₂O₃, ZrO₂, and whisker growth enhancing compound is ≤ 10 wt% of the total weight of the powder mixture. If a source is used that differs from the oxide component, one skilled in the art can calculate the amount of oxide component that will be derived from the source. The total quantity is preferably within a range of from 3 to 7 wt%.

The preparation of a finely-divided powder mixture containing Si₃N₄, and sources of MgO, SiO₂, Y₂O₃, ZrO₂, and whisker growth enhancing compound(s) is accomplished in any suitable manner with conventional apparatus. Ball or attrition-milling of the components in powder form is an acceptable manner of preparation. If ZrO₂ balls are used as milling media, powdered ZrO₂ may not need to be added to the powder mixture, depending on the amount of ZrO₂ required by the composition, because it is obtained from the ZrO₂ balls. After attrition-milling, the attritor balls are removed, and any conventional method of forming the composition into pre-sintering greenware may be utilized.

Generally, it is advantageous to prepare the above described Si₃N₄ composition by use of a carrier medium. The powders and carrier medium form a solid suspension having a viscosity suitable for mixing. Preparation of the above described composition in a carrier medium requires no particular order of addition of the components. For example, it is possible to add the powdered combination or one or more individual components thereof to a colloidal suspension of Si₃N₄ in the carrier medium or vice versa. Alternatively, all components of the powder mixture may be added simultaneously to the carrier medium prior to attrition-milling. The process is typically conducted in a large vessel at room temperature (taken as 23°C), under air, with vigorous stirring. This is one method of deagglomeration mixing, but any common stirring means is suitable, such as the above described ball-milling device or attrition mixer. An ultrasonic vibrator may be used in a supplementary manner to break down smaller agglomerates. However, the attrition mixer is preferred.

The carrier medium may be any inorganic or organic compound that is a liquid at room temperature and atmospheric pressure and in which the powdered sources of the components can be dispersed. Any quantity of carrier medium that achieves its purpose is sufficient and acceptable. Suitably, the carrier medium is aqueous and is employed in a quantity sufficient to provide a solids content within a range of from 15 to 50 vol%, based upon total volume of carrier medium and solids. Preferably, the range is from 35 to 44 vol%. Below the 15 vol% lower limit, the viscosity of the solid suspension may be too low and deagglomeration mixing may be ineffective. Above the 50 vol% upper limit, the viscosity may be too high and deagglomeration mixing may be difficult.

To aid in dispersing components of the powder mixture into the carrier medium, one or more surfactants or dispersants may be added to the suspension. The choice of surfactant(s) or dispersant(s) can vary widely as is well-known in the art. Any surfactant or dispersant is acceptable if it improves dispersion of the powder mixture components and does not adversely affect other process conditions or characteristics of the resultant product. Preferably, the surfactant for an aqueous carrier medium is KV 5088 (Zschimmer & Schwarz). With an aqueous-KV 5088 carrier medium, a colloidal suspension can be slip-cast or pressure cast to a green density above 55% of theoretical. In contrast, when using an alcohol carrier medium such as methanol, the KV 5088 dispersant is not advantageously used. Instead, a flocculant such as oleic acid may be used to ease recovery of the powder mixture. In this case, colloidal processing, such as slip-casting, is usually not used because the density of the resulting greenware is believed to be too low. When an alcohol carrier medium is used, the powder is preferably dried, sieved, and dry-pressed into greenware.

Any amount of surfactant or dispersant is acceptable provided dispersion of the powder mixture components is improved. The amount of surfactant is typically within a range of from 0.01 to 1.5 wt%, based on powder mixture weight. When using the preferred aqueous carrier medium, the amount of KV 5088 surfactant is preferably within a range of from 0.5 to 1.5 wt%, more preferably from 0.7 to 1.2 wt%, based on powder mixture weight.

Once the Si₃N₄, and sources of MgO, SiO₂, Y₂O₃, ZrO₂, and whisker growth enhancing compound(s) are finely-divided and dispersed, they may be formed into greenware, preferably by slip-casting. After slip-casting, the greenware is further dried under standard drying conditions. During the drying process, additional free carrier medium is removed. The drying temperature depends on the boiling point of the carrier medium employed. Drying is typically conducted at a temperature below the boiling point of the carrier medium under atmospheric pressure. For example, drying of greenware when an aqueous carrier medium has been employed is conducted by gradually heating the greenware to a temperature of 80°C and remaining at that temperature for 24 hours. For methanol, the same procedure is conducted, but the maximum temperature should be between 60°C and 70°C. A desirable green density obtained from the slip-casting method is greater than 55% of theoretical density. However, this depends upon the vol% of solids in the suspension.

Any other appropriate method for processing the composition into greenware may also be used. For example, an alternative to slip-casting would be to simply dry the suspension into a powder, grind it, pour it into a mold of the desired shape, and dry press. This process is disclosed in Pyzik, US-A-5,120,328, col. 9, lines 31-65.

Any standard equipment suitable for pressureless or low pressure gas sintering is acceptable provided it yields the dense, SRS ceramic body of this invention. Those skilled in the art will recognize that pressureless and low pressure gas sintering are difficult densification methods and that compositions which can be densified by these methods may also be densified by hot pressing (HP) or hot isostatic pressing (HIP). Standard equipment and pressure conditions for pressureless and low pressure gas sintering are disclosed in Pyzik, US-A-5,120,328 at col. 10, lines 1-19. Typically, the greenware is placed into a graphite or boron nitride crucible containing a Si₃N₄ powder bed, or more preferably, a powder bed of Si₃N₄ and oxides of the same metal components present in the greenware (MgO, SiO₂, Y₂O₃, ZrO₂ and at least one of either TiO₂ or Al₂O₃). The pressure ranges from 1 atm (0.1 MPa) to 100 atm (10 MPa).

Any sintering temperature and amount of time at the sintering temperature will suffice provided the dense, SRS ceramic body of this invention is formed. For purposes of this invention, suitable sintering temperatures and amounts of time at these temperatures are disclosed in Pyzik, US-A-5,120,328 at col. 10, lines 20-56. The sintering temperatures preferably range from 1650°C to 1825°C, more preferably, from 1700°C to 1750°C. Typically, it takes from 2 hours to 3 hours to heat the sample up to the sintering temperature. At the desired sintering temperature, the sample is preferably sintered for a period of from 3 to 36 hours, more preferably from 12 to 15 hours. Afterwards, the sample is cooled to room temperature over a period of 2 hours. Some variation in the preferred temperature range may be observed depending on the method employed in measuring the temperature. The above sintering temperatures are measured by use of a tungsten-rhenium thermocouple obtained from, and calibrated by, the Omega Company.

The pressureless sintering and low pressure gas sintering methods described hereinbefore allow for the formation of various Si₃N₄ ceramic articles of manufacture such as cutting tools or parts in pumps and engines. A variety of shapes, such as flat plates or tubes, can be prepared. In addition, using a colloidal suspension, articles of manufacture can be fabricated by slip-casting into greenware having a variety of shapes. The subsequent pressureless and low pressure sintering methods of this invention typically do not require any slicing or grinding of the slip cast to obtain the substantially fully dense near-net shape.

The SRS ceramic body produced by the process of this invention is a dense material having no significant porosity. Densification proceeds to a density of greater than 98% of theoretical; more preferably, to greater than 99% of theoretical; and most preferably, to greater than 99.5% of theoretical. Those skilled in the art will recognize that the theoretical density will vary depending upon the composition of the ceramic.

As measured by X-ray diffraction (XRD), the Si₃N₄ in the densified ceramic body is present in the beta (β) crystalline form, indicating essentially complete alpha (α) to β conversion during processing. The β-Si₃N₄ is present predominately as single crystal, "needle-like" whiskers or elongate grains, as determined by both SEM and transmission electron microscopy (TEM). The size of the β-Si₃N₄ grains is usually in a range of from 1 µm to 20 µm in length with a mean diameter of from 0.2 µm to 5 µm; preferably, with a mean diameter of from 0.3 µm to 1 µm.

As disclosed in Pyzik, US-A-5,120,328 at col. 11, lines 29-54, and measured by SEM, the whiskers are oriented randomly, and the volume occupied by the whiskers is approximately the same in all planes throughout the ceramic body. The percentage of Si₃N₄ whiskers having an aspect ratio of between 2 and 16 is desirably at least 20 vol%, preferably at least 35 vol%, as measured in a plane. The average aspect ratio of the Si₃N₄ whiskers is desirably at least 2.5, preferably at least 4.

In addition to a Si₃N₄ crystalline phase, the body of this invention contains a glassy grain boundary phase in an amount ranging from 2 to 10 wt%, preferably from 5 to 7 wt%, based on total body weight. The glassy phase comprises oxygen, nitrogen, Mg, Y, Si, Zr, and at least one metal selected from Ti and Al. In the glassy phase, the elements may be bonded in any number of different ways including: metal oxides, metal nitrides, metal oxynitrides, mixed metal oxides, mixed metal nitrides, and mixed metal oxynitrides, wherein the metals are selected from Mg, Y, Si, Zr, Ti, and Al.

Additionally, the body of this invention contains a second crystalline phase in an amount suitably ranging from 0.1 to 5 wt% of total body weight. The second crystalline phase is ZrO₂. Two other crystalline phases may also be present an amount totalling not more than 2 wt%. Specifically, these other crystalline phases comprise metal zirconium silicide and metal zirconium silicon nitride. The metal is at least one of Ti or Al.

The mechanical properties of the SRS ceramic body of this invention are readily measured by use of standard tests. In particular, fracture toughness (K_{IC}) is measured according to the Chevron notch and the Palmqvist methods. Fracture strength (modulus cf rupture) is measured according to the Military Standard 1942b test. Hardness is measured according to the Vickers indentation test. These standard tests are thoroughly discussed in Pyzik, US-A-5,120,328 at col. 12, line 64 to col. 14, line 24.

Fracture strength (modulus of rupture) measures the resistance of the material to fracture under a load. Typically, the fracture strength at room temperature is at least 95 ksi (650 MPa). Preferably, the fracture strength at room temperature ranges from 116 ksi (800 MPa) to 130 ksi (900 MPa). Typically, at 1200°C, the fracture strength is at least 65 ksi (450 MPa).

Toughness measures the resistance of the material to fracture under a dynamic load. Typically, the fracture toughness of the densified SRS ceramic body of this invention, as measured at room temperature by the Chevron notch technique, is > 6 MPa· (m)^{½}. The room temperature fracture toughness is preferably > 7 MPa· (m)^{½}; more preferably, > 7.5 MPa· (m)^{½}; and most preferably, > 7.8 MPa· (m)^{½}.

The Vickers hardness test measures the resistance of a ceramic material to indentation. The room temperature Vickers hardness of the Si₃N₄ ceramic bodies of this invention is at least 1400 kg/mm², preferably from 1425 to 1600 kg/mm² and more preferably from 1450 to 1600 kg/mm².

The Palmqvist toughness test is an extension of the Vickers test. Preferably, the Si₃N₄ ceramic bodies of this invention exhibit a Palmqvist toughness at room temperature of at least 37 kg/mm, more preferably from 37 to 52 kg/mm, and most preferably from 40 to 46 kg/mm.

The following examples serve to illustrate the novel, dense, self-reinforced Si₃N₄ bodies of this invention and the method of preparing said bodies. The examples are not intended to limit the scope of this invention.

The Si₃N₄ powder was commercially available from Ube Industries, Ltd. under the trade designation SN-E10. It contained: 1.6 % oxygen; less than 100 parts per million parts of powder (ppm) Cl; less than 100 ppm Fe; less than 50 ppm Ca; and less than 50 ppm Al. It had a crystallinity of greater than 99.5%, a ratio of β/(α+β) of less than 5, and a SA of 11.2 m²/g. Moly Corp supplied Y₂O₃, and Baker Incorporated supplied Mg(OH)₂. ZrO₂, in the form of ZrO₂ balls, was available from Union Process. ZrO₂ powder was available from Toyo Soda (type TZ-3Y20A). TiO₂ and Al₂O₃ powders were available from Alfa Products.

### Example 1

### (a) Colloidal Processing and Pressureless Sintering

A series of Si₃N₄ greenware was prepared according to a general method that began by mixing desired amounts of Si₃N₄, Mg(OH)₂, SiO₂, Y₂O₃, and a whisker growth enhancing compound (TiO₂, Al₂O₃ or a combination thereof) in an attritor (Union Process batch attritor, Model 01HD - 750 cm³ capacity with polytetrafluoroethylene coated tube and stirrer) containing ZrO₂ balls and a carrier medium with a stirring rate of 250 rpm for a mixing time of 1 hour to form a slurry. Deionized (DI) water with 0.9 wt% KV 5088 surfactant was used as the carrier medium in an amount sufficient to provide a solids content of 35 to 40 wt% solids. The slurry was poured through a 400 (37 µm) mesh plastic sieve to remove the ZrO₂ balls. The slurry was then poured into a slip-casting form positioned on gypsum plaster. The cast was dried at room temperature for 24 hours and then dried under a flow of dry nitrogen gas at a temperature of 80°C for 24 hours to form dried greenware. Greenware having a size of 2 inches (5.1 cm) in diameter by 1.5 inches (3.8 cm) in width, and 0.5 inch (1.3 cm) in thickness was placed in a graphite crucible filled with a Si₃N₄ powder bed containing oxides of the same metal components present in the greenware (MgO, SiO₂, Y₂O₃, ZrO₂, and at least one of either TiO₂ or Al₂O₃). The greenware was then pressureless sintered for 12 hours in a 4 inch (10.2 cm) ASTRO™ graphite furnace at 1750°C under a nitrogen atmosphere of 1 atm (0.1 MPa) pressure. Samples prepared by this method are set forth as Samples (a)-(e) in Table I.

### (b) Dry Pressing and Pressureless Sintering

Powdered mixtures of Si₃N₄, MgO, SiO₂, Y₂O₃ and at least one whisker growth enhancing compound (TiO₂ or Al₂O₃) were prepared by addition to a methanol slurry and attrition milling. After attrition milling, instead of slip-casting, the samples were dried for 24 hours at 70°C to provide dried powder mixtures. A sample quantity (80 g) of each dried powder mixture was poured into a stainless steel die 2 inches (5.1 cm) in diameter by 0.5 inch (1.3 cm) in thickness. The sample quantity was dry pressed at room temperature under a pressure of 5 psi (34.5 kPa) and then isostatically pressed at room temperature under a pressure of 45 ksi (310.3 MPa). The resulting pressed disc was placed in a graphite crucible, and the crucible is filled with a Si₃N₄ powder bed containing oxides of the same metal components present in the greenware. The disc was thereafter sintered as described in Example 1(a), above. Samples prepared by this method are set forth in Table I as Samples (f)-(i).

The densities of the Si₃N₄ ceramic bodies, prepared hereinabove, were measured by the water immersion method, as described in "Modern Ceramic Engineering" by D. W. Richerson, Marcel Dekker, 1982, and by stereology analysis from SEM photomicrographs with the results shown in Table I.

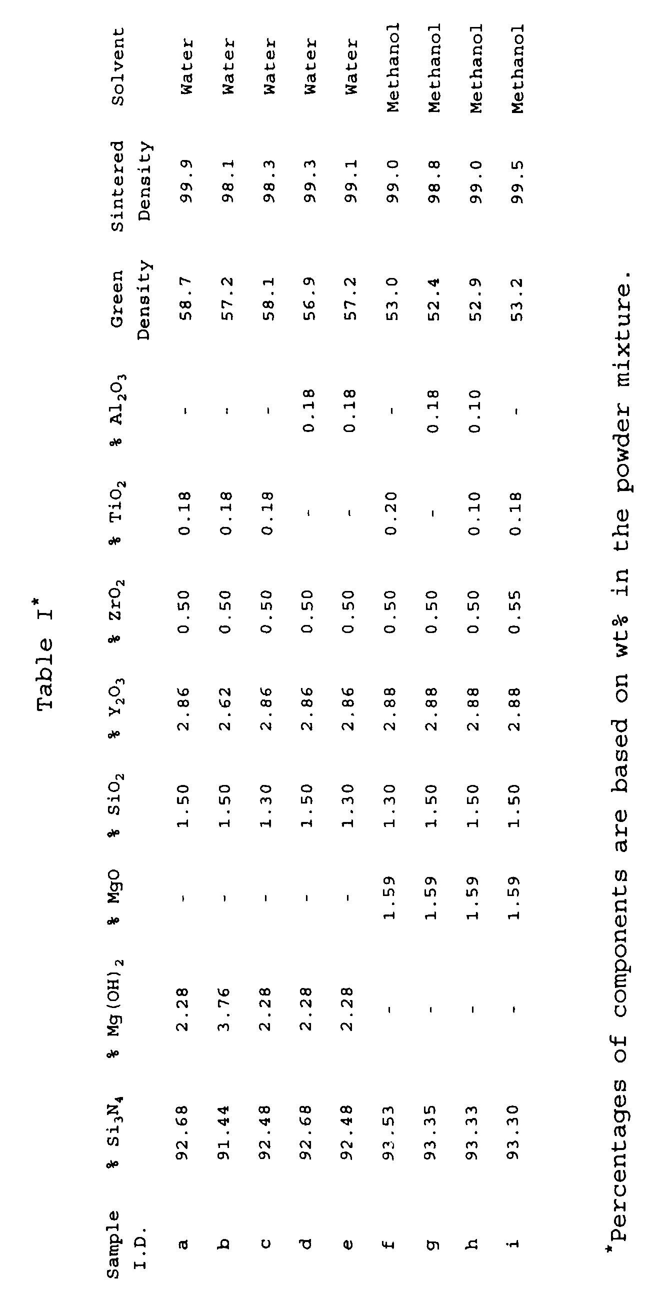

### (c) Analysis of Slip-Cast Method and Dry Press Method Phases and Morphology

Samples (a), (d), and (i) attained densities of 99.9%, 99.3%, and 99.5% of theoretical, respectively. Approximately 35 vol% of each Si₃N₄ composition contained elongate grains of β-Si₃N₄, the grains having an average aspect ratio of 2.5 and an average diameter between 0.5 µm and 1 µm.

The bulk chemical composition of Samples (a), (d), and (i) was measured by neutron activation analysis. Each contained 92 wt% crystalline Si₃N₄, 6 wt% glassy grain boundary phase, and 2 wt% other crystalline phases. The glassy grain boundary phase had an average glass composition, as measured by analytical transition electron microscopy (ATEM), as follows: 37 ± 11 wt% Y, 7 ± 5 wt% Si, 6 ± 5 wt% Mg, 6 ± 3 wt% Zr, 2 ± 1 wt% Al for (d), 2 ± 1 wt% Ti for both (a) and (i), 39 ± 10 wt% oxygen, and 3 ± 2 wt% nitrogen. Traces of CaO impurity, coming from the MgO, are also detected in the glassy grain boundary phase. A second crystalline phase of ZrO₂ was found in a concentration of 0.1 wt%. In addition, Samples (a) and (i) had two minor crystalline phases comprising zirconium titanium silicide and zirconium titanium silicon nitride in a total concentration of 2 wt%. Sample (d) had two minor crystalline phases comprising zirconium aluminum silicide and zirconium aluminum silicon nitride in a concentration of 2 wt%.

At room temperature, fracture toughness, flexural strength and Vickers Hardness were measured for Samples (a), (d), and (i). The results are shown in Table II.

**TABLE II**

| Sample I.D. | Fracture Toughness (Palmqvist test-kg/mm) | Fracture Toughness (Chevron Notch test- MPa· m^{½}) | Fracture Strength (MPa) | Vickers Hardness (kg/mm²) |
|---|---|---|---|---|
| a | 46.0 | 8.5 | 862 | 1570 |
| d | 44.2 | 8.3 | 827 | 1580 |
| i | 43.3 | 8.0 | 827 | 1550 |

### Example 2

A series of ceramic bodies was prepared as in Example 1(a), with the exception that the powder mixture comprised 93.3 wt% Si₃N₄, 2.9 wt% Y₂O₃, 2.3 wt% Mg(OH)₂, 1.3 wt% SiO₂, 0.2 wt% TiO₂, and a concentration of ZrO₂ as shown in Table III. The ceramic bodies had a sintered density of at least 98% of theoretical. The presence of ZrO₂ in an amount ranging from 0.2 to 2% led to a sintered density of at least 99% of theoretical. In the absence of ZrO₂ (Sample a*****) or in the presence of excess ZrO₂ (Sample f), lower densities were obtained.

**TABLE III**

| Sample I.D. | Wt. % ZrO₂ | % Theor. Density |
|---|---|---|
| a* | 0 | 97.5 |
| b | 0.2 | 99.3 |
| c | 0.5 | 99.5 |
| d | 1.0 | 99.5 |
| e | 2.0 | 99.2 |
| f | 5.0 | 98.4 |

| | | |
|---|---|---|
| * not an example of the invention | | |

### Example 3

Two greenware samples were prepared as in Example 1(a), with the exception that one powder mixture comprised: 92.9 wt% Si₃N₄, 2.3 wt% Mg(OH)₂, 1.5 wt% SiO₂, 2.9 wt% Y₂O₃, and 0.4 wt% calcium titanate (CaTiO₃); and the other comprised, 92.8 wt% Si₃N₄, 2.3 wt% Mg(OH)₂, 1.0 wt% SiO₂, 2.9 wt% Y₂O₃, and 1.0 wt% calcium silicate (CaSiO₃). The compositions were separately attrition mixed with carrier mediums of 135 ml of D.I. water and 1.75 ml of KV 5088 surfactant, providing solids loadings of 35 vol%. After dispersion, minimal flocculation was observed. It was also observed that replacing either CaTiO₃ or CaSiO₃ with CaO led to flocculation of the powder mixture in the water carrier medium and precluded preparation of greenware via slip casting. The resultant slurries were slip cast and dried as described in Example 1(a).

The resulting ceramic greenware casts had green densities of 53.7% and 54.8% of theoretical, respectively. The greenware casts were then pressureless sintered as described in Example 1(a) to obtain sintered densities of 99.4% and 99.3% of theoretical, respectively.

This example shows that, while CaO cannot be used in a water carrier medium, CaTiO₃ and CaSiO₃ introduce both calcium and either Ti or Si, respectively, into the composition and do not flocculate in water carrier mediums. Similar results are expected with other compositions and process variations, all of which are disclosed in this application.

## Claims

1. A process for preparing a dense, self-reinforced silicon nitride ceramic body by pressureless or low pressure gas sintering, the process comprising subjecting a powder mixture including:
(a) Si₃N₄ in an amount sufficient to provide a ceramic body;
(b) a combination of a source of MgO and a source of SiO₂, the SiO₂ being present in an amount sufficient to provide a total SiO₂ content of at least 3 wt%, and the combination being present in an amount sufficient to aid densification of the powder;
(c) a source of Y₂O₃ in an amount sufficient to promote essentially complete conversion of the Si₃N₄ to β-Si₃N₄;
(d) a catalytic amount of a source of ZrO₂; and
(e) at least one whisker growth enhancing compound in an amount sufficient to promote the formation of β-Si₃N₄ whiskers, said compound(s) being selected from a source of TiO₂ and a source of Al₂O₃;
to a pressure within a range of from 1 atm (0.1 MPa) to 100 atm (10 MPa) and to a temperature sufficient to provide for densification to a value which is at least 98% of theoretical and sufficient to provide in situ formation of β-Si₃N₄ whiskers having an average aspect ratio of at least 2.5, such that the ceramic has a fracture toughness greater than 6 MPa· (m)^{½} as measured by the Chevron notch technique at 23°C.

2. A process as claimed in Claim 1, wherein the amount of Si₃N₄ ranges from 90 to 98 wt% based on total weight of the powder mixture.

3. A process as claimed in Claim 1 or Claim 2, wherein the source(s) of SiO₂ are present in an amount sufficient to provide a total SiO₂ content within a range of from 3 to 5 wt% based on total weight of the powder mixture.

4. A process as claimed in any one of the preceding claims, wherein the source of MgO is present in an amount sufficient to provide a MgO content within a range of from 0.5 to 3 wt%, based on total weight of the powder mixture.

5. A process as claimed in any one of the preceding claims, wherein the amount of the source of Y₂O₃ is sufficient to provide an Y₂O₃ content within a range of from 1 to 6 wt%, based on total weight of the powder mixture.

6. A process as claimed in any one of the preceding claims, wherein the amount of the source of ZrO₂ is sufficient to provide a ZrO₂ content within a range of from 0.2 to 3 wt%, based on total weight of the powder mixture.

7. A process as claimed in any one of the preceding claims, wherein the whisker growth enhancing compound content is within a range of from 0.01 to 3 wt%, based on total weight of the powder mixture.

8. A process as claimed in any one of the preceding claims, wherein the amounts of the sources of Y₂O₃, MgO, and SiO₂ provide a weight ratio of Y₂O₃ to the combination of MgO and SiO₂ that is within a range of from 2:1 to 1:8.

9. A process as claimed in any one of the preceding claims, wherein the amounts of the sources of MgO, SiO₂, and ZrO₂ provide a weight ratio of the combination of SiO₂ and MgO to ZrO₂ that is within a range of from 40:1 to 1:1.

10. A process as claimed in any one of the preceding claims, wherein the powder mixture is formed into greenware prior to sintering.

11. A process as claimed in Claim 10, wherein the greenware is formed out of a colloidal suspension comprising the powder mixture dispersed in an aqueous carrier medium, each component of the powder mixture being water dispersible and nonflocculating.

12. A process as claimed in Claim 11, wherein the source of MgO is Mg(OH)₂.

13. A process as claimed in Claim 11 or Claim 12, wherein the aqueous carrier medium is admixed with a surfactant.

14. A silicon nitride ceramic body having a density that is at least 98% of thecretical value and a toughness greater than 6 MPa· (m)^{½} as measured by the Chevron notch technique at 23°C, comprising:
(a) a crystalline phase of β-Si₃N₄ of which at least 20 vol%, as measured by viewing one plane of the Si₃N₄ ceramic body by SEM, is present as whiskers having an average aspect ratio of at least 2.5;
(b) a glassy grain boundary phase, in an amount ranging from 2 to 10 wt%, based on total weight of the composition, comprising oxygen, nitrogen, Mg, Y, Si, Zr, and at least one metal selected from Ti and Al;
(c) a second crystalline phase comprising ZrO₂, in an amount ranging from 0.1 to 3 wt% based on total weight of the composition; and
(d) at least one additional crystalline phase in an amount ranging from 0.1 to 3 wt% based on total weight of the composition, the additional phase(s) comprising metal zirconium silicide and metal zirconium silicon nitride, wherein the metal is selected from Ti and Al.

15. A body as claimed in Claim 14, wherein the glassy grain boundary phase contains Mg, Si, Y, Zr, Ti, oxygen, and nitrogen, and wherein two other crystalline phases of titanium zirconium silicide and titanium zirconium silicon nitride are present.

16. A body as claimed in Claim 14, wherein the glassy grain boundary phase contains Mg, Si, Y, Zr, Al, oxygen, and nitrogen, and wherein two other crystalline phases of aluminum zirconium silicide and aluminum zirconium silicon nitride are present.

17. An article of manufacture prepared from the body of Claim 14.

## Patentansprüche

1. Verfahren zur Herstellung eines dichten, selbstverstärkten Siliciumnitrid-Keramikkörpers durch druckfreies oder Niederdruck-Gassintern, wobei das Verfahren umfaßt Unterziehen eines Pulvergemisches, umfassend:
(a) Si₃N₄ in einer ausreichenden Menge, um einen Keramikkörper zu ergeben;
(b) eine Kombination einer MgO-Quelle und einer SiO₂-Quelle, wobei das SiO₂ in einer ausreichenden Menge vorliegt, um einen Gesamt-SiO₂-Gehalt von mindestens 3 Gew.-% zu liefern und die Kombination in einer ausreichenden Menge vorliegt, um die Verdichtung des Pulvers zu unterstützen;
(c) eine Y₂O₃-Quelle in einer ausreichenden Menge, um eine im wesentlichen vollständige Überführung des Si₃N₄ in β-Si₃N₄ zu fördern;
(d) eine katalytische Menge einer ZrO₂-Quelle; und
(e) mindestens eine Whiskerwachstum fördernde Verbindung in einer ausreichenden Menge, um die Bildung von β-Si₃N₄-Whiskern zu fördern, wobei diese mindestens eine Verbindung ausgewählt ist aus einer TiO₂-Quelle und einer Al₂O₃-Quelle;
einem Druck im Bereich von 1 atm (0,1 MPa) bis 100 atm (10 MPa) und einer Tempertur, die ausreicht, um eine Verdichtung auf einen Wert zu ergeben, der mindestens 98 % des theoretischen beträgt und ausreicht, um die in situ Bildung von β-Si₃N₄-Whiskern zu ergeben, die ein durchschnittliches Aspektverhältnis von mindestens 2,5 aufweisen, so daß die Keramik eine Bruchzähigkeit von größer als 6 MPa· (m)^{½}, wie durch die Chevron Kerbtechnik bei 23°C gemessen, aufweist.

2. Verfahren nach Anspruch 1, worin die Si₃N₄-Menge im Bereich von 90 bis 98 Gew.-%, bezogen auf das Gesamtgewicht des Pulvergemisches liegt.

3. Verfahren nach Anspruch 1 oder 2, worin die SiO₂-Quelle (die SiO₂-Quellen) in einer ausreichenden Menge vorliegt (vorliegen), um einen Gesamt-SiO₂-Gehalt in einem Bereich von 3 bis 5 Gew.-%, bezogen auf das Gesamtgewicht des Pulvergemisches, zu ergeben.

4. Verfahren nach einem der vorhergehenden Ansprüche, worin die MgO-Quelle in einer ausreichenden Menge vorliegt, um einen MgO-Gehalt im Bereich von 0,5 bis 3 Gew.-%, bezogen auf das Gesamtgewicht des Pulvergemisches zu ergeben.

5. Verfahren nach einem der vorhergehenden Ansprüche, worin die Menge der Y₂O₃-Quelle ausreichend ist, um einen Y₂O₃-Gehalt in einem Bereich von 1 bis 6 Gew.-%, bezogen auf das Gesamtgewicht des Pulvergemisches zu ergeben.

6. Verfahren nach einem der vorhergehenden Ansprüche, worin die Menge der ZrO₂-Quelle ausreicht, um einen ZrO₂-Gehalt in einem Bereich von 0,2 bis 3 Gew.-%, bezogen auf das Gesamtgewicht des Pulvergemisches zu ergeben.

7. Verfahren nach einem der vorhergehenden Ansprüche, worin der Gehalt der Whiskerwachstum fördernden Verbindung im Bereich von 0,01 bis 3 Gew.-%, bezogen auf das Gesamtgewicht des Pulvergemisches liegt.

8. Verfahren nach einem der vorhergehenden Ansprüche, worin die Mengen der Quellen von Y₂O₃, MgO und SiO₂ ein Gewichtsverhältnis von Y₂O₃ zu der Kombination von MgO und SiO₂ ergeben, das im Bereich von 2 : 1 bis 1 : 8 liegt.

9. Verfahren nach einem der vorhergehenden Ansprüche, worin die Mengen der Quellen von MgO, SiO₂ und ZrO₂ ein Gewichtsverhältnis der Kombination von SiO₂ und MgO zu ZrO₂ ergeben, das im Bereich von 40 : 1 bis 1 : 1 liegt.

10. Verfahren nach einem der vorhergehenden Ansprüche, worin das Pulvergemisch vor dem Sintern zu einem Grünkörper geformt wird.

11. Verfahren nach Anspruch 10, worin der Grünkörper aus einer Kolloidsuspension gebildet wird, welche das in einem wäßrigen Trägermedium dispergierte Pulvergemisch umfaßt, wobei jeder Bestandteil des Pulvergemisches wasserdispergierbar und nicht ausflockend ist.

12. Verfahren nach Anspruch 11, worin die MgO-Quelle Mg(OH)₂ ist.

13. Verfahren nach Anspruch 11 oder 12, worin das wäßrige Trägermedium mit einem oberflächenaktiven Mittel gemischt wird.

14. Siliciumnitrid-Keramikkörper mit einer Dichte, die mindestens 98 % des theoretischen Wertes beträgt und einer Zähigkeit größer als 6 MPa·(m)^{½}, wie durch die Chevron Kerbtechnik bei 23°C gemessen, umfassend:
(a) eine kristalline Phase von β-Si₃N₄, von der mindestens 20 Vol.-%, wie durch Ansehen einer Ebene des Si₃N₄-Keramikkörpers durch SEM gemessen, als Whisker mit einem durchschnittlichen Aspektverhältnis von mindestens 2,5 vorliegen;
(b) eine glasartige Korngrenzphase in einer Menge im Bereich von 2 bis 10 Gew.-%, bezogen auf das Gesamtgewicht der Zusammensetzung, umfassend Sauerstoff, Stickstoff, Mg, Y, Si, Zr und mindestens ein Metall, ausgewählt aus Ti und Al;
(c) eine zweite kristalline Phase, umfassend ZrO₂ in einer Menge im Bereich von 0,1 bis 3 Gew.-% bezogen auf das Gesamtgewicht der Zusammensetzung; und
(d) mindestens eine weitere kristalline Phase in einer Menge im Bereich von 0,1 bis 3 Gew.-%, bezogen auf das Gesamtgewicht der Zusammensetzung, wobei die mindestens eine weitere Phase Metall-Zirkonium-Silicid und Metall-Zirkonium-Silicium-Nitrid umfaßt, worin das Metall ausgewählt ist aus Ti und Al.

15. Körper nach Anspruch 14, worin die glasartige Korngrenzphase Mg, Si, Y, Zr, Ti, Sauerstoff und Stickstoff enthält und worin zwei weitere kristalline Phasen aus Titan-Zirkonium-Silicid und Titan-Zirkonium-Silicium-Nitrid vorliegen.

16. Körper nach Anspruch 14, worin die glasartige Korngrenzphase Mg, Si, Y, Zr, Al, Sauerstoff und Stickstoff enthält und worin zwei weitere kristalline Phasen von Aluminium-Zirkonium-Silicid und Aluminium-Zirkonium-Silicium-Nitrid vorliegen.

17. Angefertigter Gegenstand, hergestellt aus dem Körper nach Anspruch 14.

## Revendications

1. Procédé pour préparer un corps céramique de nitrure de silicium auto-renforcé dense, par frittage sous faible pression de gaz ou sans pression, le procédé consistant à soumettre un mélange de poudres comprenant:
(a) Si₃N₄ en quantité suffisante pour fournir un corps céramique;
(b) une combinaison d'une source de MgO et d'une source de SiO₂, SiO₂ étant présent en quantité suffisante pour fournir une teneur totale en SiO₂ d'au moins 3 pourcent en poids (% en poids), la combinaison étant présente en quantité suffisante pour aider à la densification de la poudre;
(c) une source de Y₂O₃ en quantité suffisante pour activer la conversion essentiellement complète du Si₃N₄ en β-Si₃N₄;
(d) une quantité catalytique d'une source de ZrO₂; et
(e) au moins un composé favorisant la croissance de trichites en quantité suffisante pour activer la formation de trichites de β-Si₃N₄, le (ou lesdits) composé(s) étant choisi(s) entre une source de TiO₂ et une source d'Al₂O₃;
sous une pression comprise entre 1 atm (0,1 MPa) et 100 atm (10 MPa) et à une température suffisante pour obtenir la densification à une valeur qui représente au moins 98% de la valeur théorique et qui est suffisante pour obtenir in situ la formation de trichites de β-Si₃N₄ ayant un rapport d'aspect moyen d'au moins 2,5, de sorte que la céramique possède une ténacité à la fracture supérieure à 6 MPa.(m)^{½}, telle que mesurée par la technique avec entaille en chevron à 23°C.

2. Procédé selon la revendication 1, dans lequel la quantité de Si₃N₄ est comprise entre 90 et 98% en poids par rapport au poids total du mélange de poudres.

3. Procédé selon l'une des revendications 1 ou 2, dans lequel la (ou les) source(s) de SiO₂ est (sont) présente(s) en quantité suffisante pour fournir une teneur totale en SiO₂ comprise entre 3 et 5% en poids par rapport au poids total du mélange de poudres.

4. Procédé selon l'une des revendications précédentes, dans lequel la source de MgO est présente en quantité suffisante pour fournir une teneur en MgO comprise entre 0,5 et 3% en poids par rapport au poids total du mélange de poudres.

5. Procédé selon l'une des revendications précédentes, dans lequel la quantité de la source de Y₂O₃ est suffisante pour fournir une teneur en Y₂O₃ comprise entre 1 et 6% en poids par rapport au poids total du mélange de poudres.

6. Procédé selon l'une des revendications précédentes, dans lequel la quantité de la source de ZrO₂ est suffisante pour fournir une teneur en ZrO₂ comprise entre 0,2 et 3% en poids par rapport au poids total du mélange de poudres.

7. Procédé selon l'une des revendications précédentes, dans lequel la teneur du composant favorisant la croissance de trichites est comprise entre 0,01 et 3% en poids par rapport au poids total du mélange de poudres.

8. Procédé selon l'une des revendications précédentes, dans lequel les quantités des sources de Y₂O₃, de MgO et de SiO₂ fournissent un rapport pondéral de Y₂O₃ à la combinaison de MgO et SiO₂ qui est compris entre 2:1 et 1:8.

9. Procédé selon l'une des revendications précédentes, dans lequel les quantités des sources de MgO, de SiO₂ et de ZrO₂ fournissent un rapport pondéral de la combinaison de SiO₂ et de MgO à ZrO₂ qui est compris entre 40:1 et 1:1.

10. Procédé selon l'une des revendications précédentes, dans lequel le mélange de poudres est mis sous forme de céramique crue avant le frittage.

11. Procédé selon la revendication 10, dans lequel la céramique crue est formée à partir d'une suspension colloïdale comprenant le mélange de poudres dispersé dans un milieu porteur aqueux, chaque composant du mélange de poudres étant dispersible dans l'eau et non floculant.

12. Procédé selon la revendication 11, dans lequel la source de MgO est Mg(OH)₂.

13. Procédé selon l'une des revendications 11 ou 12, dans lequel le milieu porteur aqueux est mélangé avec un tensioactif.

14. Corps céramique de nitrure de silicium ayant une densité qui est au moins 98% de la valeur théorique et possède une ténacité supérieure à 6 MPa.(m)^{½}, telle que mesurée par la technique avec entaille en chevron à 23°C, comprenant:
(a) une phase cristalline de β-Si₃N₄ dont au moins 20% en volume, mesurée en observant un plan du corps céramique de Si₃N₄ par microscopie électronique à balayage (SEM), sont présents sous forme de trichites ayant un rapport d'aspect moyen d'au moins 2,5;
(b) une phase vitreuse au niveau des joints de grain à raison de 2 à 10% en poids, par rapport au poids total de la composition, comprenant de l'oxygène, de l'azote, Mg, Y, Si, Zr, et au moins un métal choisi entre Ti et Al;
(c) une deuxième phase cristalline comprenant ZrO₂ à raison de 0,1 à 3% en poids par rapport au poids total de la composition; et
(d) au moins une phase cristalline supplémentaire à raison de 0,1 à 3% en poids par rapport au poids total de la composition, la (ou les) phase(s) supplémentaire(s) comprenant un siliciure de zirconium et d'un métal et un nitrure de zirconium, de silicium et d'un métal, dans lesquels le métal est choisi entre Ti et Al.

15. Corps selon la revendication 14, dans lequel la phase vitreuse au niveau des joints de grain contient Mg, Si, Y, Zr, Ti, de l'oxygène et de l'azote, et dans lequel deux autres phases cristallines de siliciure de titane et de zirconium et de nitrure de titane, de zirconium et de silicium sont présentes.

16. Corps selon la revendication 14, dans lequel la phase vitreuse au niveau des joints de grain contient Mg, Si, Y, Zr, Al, de l'oxygène et de l'azote, et dans lequel deux autres phases cristallines de siliciure d'aluminium et de zirconium et de nitrure d'aluminium, de zirconium et de silicium sont présentes.

17. Article manufacturé préparé à partir du corps selon la revendication 14.
